# EUROPÄISCHE PATENTSCHRIFT

(11) **EP 3 347 959 B1**
(45) Veröffentlichungstag und Bekanntmachung des Hinweises auf die Patenterteilung: **25.08.2021**
(21) Anmeldenummer: 16758180.0
(22) Anmeldetag: 31.08.2016
(51) Int. Cl.: H02H 9/04, H02H 1/00, H01H 83/10

(54) **ANORDNUNG ZUR SICHEREN, VON SCHALTGERÄTEN ODER VORSICHERUNGEN UNABHÄNGIGEN, NETZSEITIGEN ABTRENNUNG VON ÜBERSPANNUNGSSCHUTZEINRICHTUNGEN IM FALL KRITISCHER BETRIEBSZUSTÄNDE**
ARRANGEMENT FOR SAFELY REMOVING OVERVOLTAGE PROTECTION DEVICES FROM THE MAINS, INDEPENDENTLY OF SWITCHGEAR OR BACKUP FUSES, IN THE EVENT OF CRITICAL OPERATING STATES
DISPOSITIF DE COUPURE SÛRE CÔTÉ RÉSEAU, INDÉPENDAMMENT D'APPAREILS DE DISTRIBUTION ET DE FUSIBLES AUXILIAIRES, DE MOYENS DE PROTECTION CONTRE LES SURTENSIONS EN CAS D'ÉTATS DE FONCTIONNEMENT CRITIQUES

(30) Priorität: 11.09.2015 DE 102015011900; 14.01.2016 DE 102016000355
(43) Veröffentlichungstag der Anmeldung: 18.07.2018
(73) Patentinhaber: DEHN SE + Co KG, 92318 Neumarkt / Opf. (DE)
(72) Erfinder: BROCKE, Ralph, 98693 Ilmenau / Oberpörlitz (DE); ZAHLMANN, Peter, 92318 Neumarkt (DE)
(74) Vertreter: Prinz & Partner mbB
(86) Internationale Anmeldenummer: PCT/EP2016/070467
(87) Internationale Veröffentlichungsnummer: WO 2017/042063

(56) Entgegenhaltungen:
- EP-A1- 0 326 903
- WO-A1-2016/034392
- DE-T2-602005 000 540
- DE-U1- 29 514 854

## Beschreibung

Die Erfindung betrifft eine Anordnung zur sicheren, von Schaltgeräten oder Vorsicherungen unabhängigen, netzseitigen Abtrennung von Überspannungsschutzeinrichtungen im Fall kritischer Betriebszustände, insbesondere dem Übergang der Überspannungsschutzeinrichtung in einen Fehler- oder Überlastzustand, bestehend aus einer Einrichtung zur Erfassung des durch die Überspannungsschutzeinrichtung fließenden Stromes sowie einer, mit der Überspannungsschutzeinrichtung elektrisch in Reihe befindlichen Schaltvorrichtung, gemäß Anspruch 1.

Aus der EP 0 326 903 A1 ist eine Schutzeinrichtung gegen Überspannungen in elektrischen Anlagen vorbekannt, welche Varistoren in einem Nebenzweig aufweist, die ihrerseits durch eine Überwachungseinrichtung auf nicht betriebsmäßigen Anstieg des Leckstromes überwacht und gegebenenfalls abgeschaltet werden.

Konkret sind der Phasenleiter durch einen Wandler und einen Varistor sowie die Schaltkontakte einer Abschaltvorrichtung gegen Erde geschalten.

Der vorhandene Wandler übersetzt die durch den Varistor fließenden Ströme so, dass selbige in einem günstigen Erfassungsbereich liegen.

Die eigentliche Überwachungseinrichtung liegt im Sekundärkreis des Wandlers und weist ein Stromerfassungsglied und ein damit in Verbindung stehendes Zeiterfassungsglied auf.

Wenn der ermittelte Strom größer oder gleich einem Schwellwert wird, gibt der Ausgang ein Auslösesignal ab, das einem UND-Gatter zugeführt wird. Wenn die Überschreitung des Schwellwerts eine vorgegebene Zeit t für einen Schwellwert überschreitet, gibt ebenfalls das Zeiterfassungsglied ein Signal frei, das auf das UND-Gatter gelangt. In dem Fall, wenn am UND-Gatter beide Signale anliegen, steht an dessen Ausgang das Auslösesignal an, das einen Auslöser in einer Abschaltvorrichtung zum Ansprechen bringt, so dass die vorerwähnten Schaltkontakte geöffnet werden. Mit der vorbekannten Schutzeinrichtung gelingt es, Varistoren nicht unnötig abzuschalten und somit den Überspannungsschutz einzuschränken. Vielmehr wird die Überwachung der Eigenschaften der eingesetzten Varistoren insofern erweitert, dass als zusätzliches Kriterium eine Überschreitung einer bestimmten vorgegebenen Zeitdauer einer Strombelastung den eigentlichen Auslösevorgang determiniert.

Bei der vorbekannten Lösung können zwar Fehlerströme im Bereich von 0,1 bis 10 mA erfasst werden, bei denen das Zeitverhalten an sich unkritisch ist. Nicht möglich ist jedoch eine Überwachung von Überspannungsschutzeinrichtungen bezogen auf den Fall eines sehr schnellen Übergehens in einen niederohmigen Zustand, wobei Fehlerströme mittlerer Amplitude bis zu einigen kA auftreten können. Derartige Ströme sind außerordentlich energiereich und können zu gefährlichen Situationen in einer entsprechenden Anlage oder Einrichtung führen.

Die DE 10 2009 004 673 A1 zeigt ein Überspannungsschutzelement mit mindestens einem überspannungsbegrenzenden Bauteil, insbesondere einer Funkenstrecke oder einem Varistor. Dem überspannungsbegrenzenden Bauteil ist ein Überwachungsbauelement zugeordnet, das einen über das überspannungsbegrenzende Bauelement fließenden Strom erfasst. Weiterhin wird das Signal des Überwachungsbauelements einer Auswerteeinheit zugeführt, die galvanisch vom Ableitstrompfad getrennt ist.

Das Überwachungsbauelement kann als Spule ausgebildet werden, die induktiv mit dem Ableitstrompfad gekoppelt ist.

Die bekannte Lösung ermöglicht die Erfassung der Beanspruchung des überspannungsbegrenzenden Bauelements im Betrieb, so dass letztendlich eine Aussage über die Belastung getroffen werden kann, bevor es zu einem Defekt des Bauelements kommt. Ziel ist es, vorgeschädigte Überspannungsschutzelemente rechtzeitig zu erkennen und austauschen zu können.

Eine Möglichkeit zur automatischen Abschaltung eines gegebenenfalls überlasteten überspannungsbegrenzenden Bauelements ist in der DE 10 2009 004 673 A1 nicht vorgesehen.

In der DE 295 148 54 U1 ist eine Schutzeinrichtung für Überspannungsableiter beschrieben, bei der Varistoren als spannungsbegrenzende Elemente mit einem Trennschalter in Reihe geschaltet sind, der nach dem Prinzip eines verzögerten, stoßstromfesten Fehlerstromschutzschalters arbeitet und durch ein Relais ausgelöst wird.

Bekanntermaßen werden Überspannungsschutzeinrichtungen zum Schutz von elektrischen Anlagen vor gefährlichen Überspannungen eingesetzt und insofern mit einem Niederspannungsnetz verbunden. Elektrische Einflüsse, wie z.B. Spannungsschwankungen, zeitweilige Überspannungen oder eine Vielzahl von Ableitvorgängen können zu einer Überlastung, aber auch zu einem abrupten Lebensdauerende der eingesetzten Schutzeinrichtung führen.

Das Lebensdauerende einer solchen Schutzeinrichtung kann sich aber auch beispielsweise durch ein Ansteigen des Betriebs- oder Leckstroms bemerkbar machen. Steigt dieser Leckstrom allmählich, z.B. im Sekundenbereich an, führt dies aufgrund einer steigenden Verlustleistung zu einer Erwärmung der eingesetzten Schutzkomponente, z.B. eines Varistors.

Es ist bekannt, Varistoren so auszugestalten, dass die oben geschilderte Fehlersituation sicher beherrscht wird. Insofern sind thermische Abtrennvorrichtungen bekannt.

Wird eine Überspannungsschutzeinrichtung jedoch durch falsche Auswahl von Bemessungsspannungen oder durch unerwartet hohe Impulsströme derart überlastet, dass die eingesetzte Überspannungsschutzkomponente plötzlich und vollständig ausfällt, d.h. in einen niederohmigen oder einen Kurzschlusszustand übergeht, kann die anliegende Netzspannung einen Fehlerstrom durch die Überspannungsschutzeinrichtung hervorrufen, der zu einem gefährlichen Zustand, wie z.B. Brand oder Explosion, führt. Um dies auszuschließen, werden Überspannungsschutzeinrichtungen üblicherweise nur hinter in Energieflussrichtung vorgeschalteten Sicherungen oder Schaltgeräten ei ngesetzt.

Das Auslösen derartiger Sicherungen oder Schaltgeräte erfolgt unabhängig vom auftretenden Fehler- bzw. Kurzschlussstrom, oft jedoch abhängig von prospektiven Strömen oder Belastungen. Da die bekannten Schaltgeräte in vielen Fällen auch für den Betriebsstrom ausgelegt werden, erfolgt ein sicheres Abtrennen der Überspannungsschutzeinrichtung oftmals nicht rechtzeitig, so dass Schäden an der Überspannungsschutzeinrichtung selbst oder am Einbauort zu verzeichnen sind.

Dabei hat es sich gezeigt, dass insbesondere Fehlerströme mittlerer Amplitude im Bereich von einigen 10 A bis zu wenigen kA besonders kritisch sind, da diese das vorgeschaltete Schutzorgan, nämlich die Sicherung oder ein Schaltgerät, nicht oder zu spät auslösen.

Bekannte thermische Abtrennvorrichtungen in Überspannungsschutzeinrichtungen sind so ausgeführt, dass selbige Leckströme im Bereich von Milliampere bis zu wenigen Ampere beherrschen. Da derartige thermisch auslösende Abtrennvorrichtungen vergleichsweise träge reagieren, sind selbige nicht in der Lage, rechtzeitig die genannten Fehlerströme im Bereich von 10 A bis zu wenigen kA zu unterbrechen, wenn die Überspannungsschutzeinrichtung sehr schnell in einen niederohmigen Zustand übergeht.

Solche kleinen Fehlerströme treten immer dann auf, wenn die Kurzschlussleistung des speisenden Niederspannungsnetzes gering ist oder der auftretende Kurzschlussstrom durch den verbleibenden Restwiderstand der entsprechenden Überspannungsschutzkomponente, z.B. eines Varistors signifikant begrenzt wird.

Weitere Überspannungsschutzeinrichtungen sind aus der DE 60 2005 000 540 T2 und der WO 2016/034392 A1 bekannt.

Aus der gattungsbildenden EP 0 613 226 A1 ist ein Abtrennschalter bekannt, der mit Überspannungsableitern gegen Erde zum Schutz von Verbrauchern oder zu schützenden Netzen arbeitet. Eine Überwachungseinrichtung mit einem Ringkern aus magnetisch leitendem Material erfasst die stromseitige Belastung durch die Überspannungsableiter. Weiterhin ist ein Auslöser vorhanden, der mit Arbeitskontakten zum netzseitigen Abtrennen in Wirkverbindung steht.

Aus dem Vorgenannten ist es daher Aufgabe der Erfindung, eine weiterentwickelte Anordnung zur sicheren, von Schaltgeräten oder Vorsicherungen unabhängigen, netzseitigen Abtrennung von Überspannungsschutzeinrichtungen im Fall kritischer Betriebszustände anzugeben, welche in der Lage ist, eine Schaltvorrichtung so anzusteuern, dass diese einerseits große Stoßströme im Ableitpfad führen kann und andererseits Fehlerströme im Amperebereich ohne Zeitverzug unterbricht. Dabei soll eine nachteilige Beeinflussung des Lösch- bzw. Ableitvermögens der eingesetzten Überspannungsschutzeinrichtung vermieden werden.

Die Lösung der Aufgabe der Erfindung erfolgt durch eine Anordnung gemäß der Merkmalskombination nach Patentanspruch 1, wobei die Unteransprüche mindestens zweckmäßige Ausgestaltungen und Weiterbildungen darstellen.

Erfindungsgemäß wird über eine geeignete induktive Ankopplung aus dem eigentlichen Ableitpfad ein Teil des dort fließenden Stromes ausgekoppelt, dann wiederum einem Schmelzleiter, z.B. einer Kennmeldersicherung, zugeführt wird und diesen im Überlastfall zum Schmelzen bringt, wobei mit Hilfe einer gekoppelten mechanischen Bewegung eine an sich bekannte und vorhandene Schaltvorrichtung auslösbar ist.

Die Auslegung des zur Auskopplung des Stromes verwendeten Mittels, insbesondere einer Toroidspule, kann dabei gezielt durch Ausrichtung der magnetischen Eigenschaften wie z.B. B/H-Kennlinie und dem Sättigungsverhalten an die Unterscheidung Stoßstrom versus Fehlerstrom angepasst werden.

Zusätzliche Filterkomponenten, bevorzugt als Tiefpassfilter ausgebildet, verbessern die notwendige Unterscheidung zwischen Ableitströmen verschiedener Impulsformen und netzfrequenten Fehlerströmen.

Die Filterkomponenten sollen dabei steile Impulse, z.B. Stoßstromimpulse bedämpfen. Bezogen auf das Sättigungsverhalten soll die Sättigung der zur Auskopplung des Stromes bevorzugt eingesetzten Toroidspule den Stoßstrom begrenzen, hingegen linear für kleine Ströme aufgebaut sein. Mit anderen Worten muss bei großen Stoßströmen die Sättigung der Spule einsetzen.

Hierdurch gelingt es, die Ansteuerung und Auslegung der Schaltvorrichtung so vorzunehmen, dass diese große Stoßströme führen kann, aber auch in der Lage ist, relativ kleine Fehlerströme im Amperebereich zu unterbrechen.

Ergänzend besteht die Möglichkeit, durch Auslegung der mechanischen Eigenschaften, insbesondere einer Kraftübersetzung oder einer einstellbaren Trägheit des Schaltsystems, eine adäquate Anpassung bezogen auf unterschiedliches Stoßstrom- und Fehlerstromverhalten vorzunehmen.

Es kann hier ein bewusst träge reagierendes mechanisches System aufgebaut werden, welches bei Stoßströmen nicht anspricht, und zwar quasi in Analogie zu einer trägen Sicherung.

Die vorzugsweise eingesetzte Toroidspule sichert darüber hinaus eine galvanische Trennung zwischen den mit Netz- bzw. Überspannungspotential behafteten elektrisch leitfähigen Komponenten in der Schutzeinrichtung und der mechanischen Betätigung der Schaltvorrichtung.

Eine Überlastung des Auslösestromkreises beim Ableiten großer Stoßströme wird durch eine bevorzugt erreichten Sättigung der eingesetzten Spule, insbesondere eines dort verwendeten Magnetkerns vermieden.

Der Einsatz einer Toroid- bzw. Ringkernspule mit Sättigung bei großen Stoßstromwerten sichert darüber hinaus, dass nur eine geringe Erhöhung des Schutzpegels der verwendeten Überspannungsschutzeinrichtung resultiert.

Die erfindungsgemäße Einrichtung zur Erfassung des durch die Überspannungsschutzeinrichtung fließenden Stromes ist, wie bereits ausgeführt, bevorzugt als Toroidspule mit oder ohne ferromagnetischem Kern ausgebildet. Die Auslegung der Toroidspule erfolgt so, dass Fehlerströme mittlerer Amplitude, welche sich von ereignisbedingten Stoßströmen unterscheiden, detektierbar sind.

Die Toroidspule steht mit einer Kennmeldersicherung oder einem ähnlichen Mittel in elektrischer Verbindung. Der Kennmelder der Kennmeldersicherung ist mechanisch mit der Schaltvorrichtung verbunden, um selbige auszulösen.

In Ausgestaltung der Erfindung besteht die Möglichkeit, den Kennmelder über eine mechanische Kräfte verstärkende Einrichtung mit der Schaltvorrichtung zu verbinden.

Erfindungsgemäß ist darüber hinaus eine Baueinheit, welche die Toroidspule, die Schaltvorrichtung und mindestens einen Überspannungsableiter, insbesondere ausgebildet als Varistor, umfasst.

Die Toroidspule ist in der Lage, Fehlerströme im Bereich von einigen 10 A bis zu wenigen kA zu detektieren, welche im Fall eines schnellen Übergangs der Überspannungsschutzeinrichtung in den niederohmigen Zustand auftreten können, so dass in diesem Fall eine sichere Abtrennung vom Netz möglich wird.

Die Erfindung soll nachstehend anhand eines Ausführungsbeispiels sowie einer Figur näher erläutert werden.

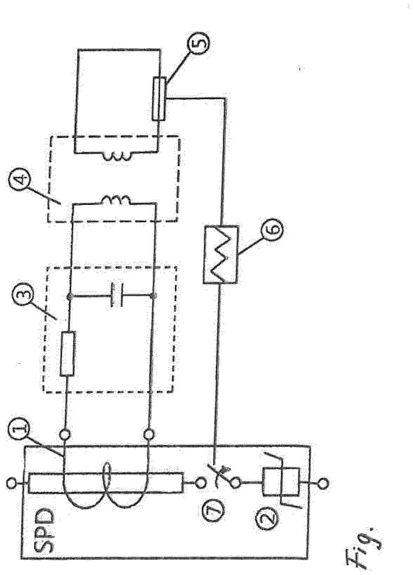

Die Figur zeigt hierbei ein Prinzipschaltbild der erfindungsgemäßen Anordnung einer Überspannungsschutzeinrichtung SPD.

Die Überspannungsschutzeinrichtung SPD umfasst, bevorzugt als Baueinheit ausgebildet, eine Ringkernspule 1, die um einen Stromleiter angeordnet ist, sowie eine mit dem Stromleiter in Reihe befindliche Schaltvorrichtung 7, die wiederum in Reihe zur Schutzkomponente, z.B. einem Metalloxid-Varistor 2 liegt.

Die Toroidspule 1 steht mit ihren Anschlüssen mit dem Eingang einer Tiefpassschaltung 3 in Verbindung, die ausgangsseitig auf einen Stromwandlerübertrager 4 führt.

In der Sekundärseite des Stromwandlerübertragers 4 ist eine Kennmeldersicherung bzw. ein Schmelzleiter mit Federvorspannung ausgebildet.

Mechanisch steht die Kennmeldersicherung 5 mit einem Kraftverstärker, z.B. ausgebildet als Kniehebelantrieb 6 mit Federvorspannung in Verbindung. Der Hebelantrieb wirkt auf die Schaltvorrichtung 7 ein und ist in der Lage, diese bei Auftreten der relevanten elektrischen Bedingungen in einen Öffnungszustand zu überführen.

Die Toroidspule 1 koppelt aus dem eigentlichen Ableitpfad einen Teil des dort fließenden Stromes aus. Dieser ausgekoppelte Strom wird zur Unterscheidung zwischen Ableitströmen verschiedener Impulsformen und netzfrequenten Fehlerströmen auf den Tiefpass 3 geführt und mittels des optionalen Übertragers 4 auf einen solchen Ausgangsstrom angepasst, dass die Kennmeldersicherung 5 definiert anspricht.

Die Ausbildung des Ringkerns der Ringkernspule 1 sichert die Möglichkeit einer einfachen Integration in den Ableitpfad der Überspannungsschutzeinrichtung SPD, wobei primärseitig nur eine geringe Induktivität vorhanden ist mit der Folge einer nur geringen Erhöhung des Schutzpegels der Überspannungsschutzeinrichtung.

Über die Kraftverstärkung mittels des beispielsweise vorgesehenen Kniehebelantriebs 6 wird ein schnelles und sicheres Öffnen der Schaltvorrichtung 7 bewirkt.

## Patentansprüche

1. Anordnung zur sicheren, von Schaltgeräten oder Vorsicherungen unabhängigen, netzseitigen Abtrennung von Überspannungsschutzeinrichtungen (SPD) im Fall kritischer Betriebszustände, insbesondere dem Übergang der Überspannungsschutzeinrichtung (SPD) in einen Fehler- oder Überlastzustand, bestehend aus einer Einrichtung zur Erfassung des durch die Überspannungsschutzeinrichtung fließenden Stromes sowie einer, mit der Überspannungsschutzeinrichtung elektrisch in Reihe befindlichen Schaltvorrichtung (7), wobei die Einrichtung zur Erfassung des durch die Überspannungsschutzeinrichtung fließenden Stromes als Toroidspule (1) mit oder ohne ferromagnetischem Kern ausgebildet ist,
**dadurch gekennzeichnet, dass**
die Auslegung der Toroidspule (1) so erfolgt, dass Fehlerströme mittlerer Amplitude, welche sich von ereignisbedingten Stoßströmen unterscheiden, detektierbar sind, wobei die Toroidspule (1) mit einer Kennmeldersicherung (5) in elektrischer Verbindung steht, deren Kennmelder mechanisch mit der Schaltvorrichtung (7) verbunden ist, um selbige auszulösen.

2. Anordnung nach Anspruch 1,
**dadurch gekennzeichnet, dass**
der Kennmelder der Kennmeldersicherung (5) über eine mechanische Kräfte verstärkende Einrichtung (6) mit der Schaltvorrichtung (7) verbunden ist.

3. Anordnung nach Anspruch 1 oder 2,
**gekennzeichnet durch**
eine Baueinheit, diese umfassend die Toroidspule (1), die Schaltvorrichtung (7) und mindestens einen Überspannungsableiter, insbesondere ausgebildet als Varistor (2)

4. Anordnung nach einem der Ansprüche 1 bis 3,
**dadurch gekennzeichnet, dass**
die Toroidspule (1) Fehlerströme im Bereich von einigen 10 A mit zu wenigen kA detektiert, welche im Fall eines schnellen Übergangs der Überspannungsschutzeinrichtung in den niederohmigen Zustand auftreten können.

5. Anordnung nach einem der vorangegangenen Ansprüche,
**dadurch gekennzeichnet, dass**
zwischen der Toroidspule (1) und der Kennmeldersicherung (5) eine Tiefpassschaltung (3) und/oder ein Übertrager (4), ausgebildet als Stromwandler, vorgesehen ist.

6. Anordnung nach einem der vorangegangenen Ansprüche,
**dadurch gekennzeichnet, dass**
die Toroidspule (1) so ausgebildet ist, dass beim Auftreten von Stoßströmen selbige in den Sättigungsbereich gelangt.

7. Anordnung nach einem der Ansprüche 2 bis 6,
**dadurch gekennzeichnet, dass**
ein Kniehebelantrieb (6) zur Kraftverstärkung vorgesehen ist.

## Claims

1. An arrangement for safely removing surge protection devices (SPD) from the mains, independently of switchgear or backup fuses, in the event of critical operating states, particularly a transition of the surge protection device (SPD) to a fault or overload state, comprising a device for sensing the current flowing through the surge protection device and a switching apparatus (7) electrically connected in series with the surge protection device, the device for sensing the current flowing through the surge protection device being formed as a toroidal coil (1) with or without a ferromagnetic core,
**characterized in that**
the design of the toroidal coil (1) is such that fault currents of medium amplitude are detectable which differ from event-induced surge currents, wherein the toroidal coil (1) is in electrical communication with an indicator fuse (5), the indicator of which is mechanically connected to the switching apparatus (7) in order to trigger same.

2. The arrangement according to claim 1,
**characterized in that**
the indicator of the indicator fuse (5) is connected to the switching apparatus (7) via a device (6) reinforcing mechanical forces.

3. The arrangement according to claim 1 or 2,
**characterized by**
a constructional unit comprising the toroidal coil (1), the switching apparatus (7) and at least one surge arrester, in particular formed as a varistor (2).

4. The arrangement according to any of claims 1 to 3,
**characterized in that**
the toroidal coil (1) detects fault currents in the range of several 10 A to a few kA, which may occur when the surge protection device makes a fast transition to the low-impedance state.

5. The arrangement according to any of the preceding claims,
**characterized in that**
a low-pass circuit (3) and/or a transformer (4) formed as a current transformer is provided between the toroidal coil (1) and the indicator fuse (5).

6. The arrangement according to any of the preceding claims,
**characterized in that**
the toroidal coil (1) is formed so as to enter the saturation range when surge currents occur.

7. The arrangement according to any of claims 2 to 6,
**characterized in that**
a toggle lever drive (6) is provided for force reinforcement.

## Revendications

1. Agencement de déconnexion sûre, côté réseau, indépendante d'appareils de commutation ou de fusibles de puissance, de moyens de protection contre les surtensions (SPD) dans le cas d'états de fonctionnement critiques, en particulier la transition du moyen de protection contre les surtensions (SPD) dans un état de défaut ou de surcharge, comprend un moyen de détection du courant traversant le moyen de protection contre les surtensions et d'un dispositif de commutation (7) agencé électriquement en série avec le moyen de protection contre les surtensions, le moyen de détection du courant traversant le moyen de protection contre les surtensions étant réalisé sous forme de bobine toroïdale (1) avec ou sans noyau ferromagnétique,
**caractérisé en ce que**
la conception de la bobine toroïdale (1) est réalisée de telle sorte qu'il est possible de détecter des courants de perte d'amplitude moyenne qui sont différents de courants d'impulsions dus à des événements, la bobine toroïdale (1) étant en communication électrique avec un fusible à voyant indicateur (5) dont le voyant indicateur est relié de manière mécanique au dispositif de commutation (7) pour déclencher ce dernier.

2. Agencement selon la revendication 1,
**caractérisé en ce que**
le voyant indicateur du fusible à voyant indicateur (5) est relié au dispositif de commutation (7) par un moyen (6) amplifiant les forces mécaniques.

3. Agencement selon la revendication 1 ou 2,
**caractérisé par**
une unité modulaire laquelle comprend la bobine toroïdale (1), le dispositif de commutation (7) et au moins un parasurtenseur, en particulier réalisé sous forme de varistance (2).

4. Agencement selon l'une des revendications 1 à 3,
**caractérisé en ce que**
la bobine toroïdale (1) détecte des courants de perte dans la plage de plusieurs 10 A à quelques kA pouvant survenir dans le cas d'une transition rapide du moyen de protection contre les surtensions à l'état de basse impédance.

5. Agencement selon l'une des revendications précédentes,
**caractérisé en ce que**
un circuit passe-bas (3) et/ou un transformateur (4) réalisé sous forme de transformateur de courant est prévu entre la bobine toroïdale (1) et le fusible à voyant indicateur (5).

6. Agencement selon l'une des revendications précédentes,
**caractérisé en ce que**
la bobine toroïdale (1) est réalisée de manière à parvenir dans la plage de saturation lorsque des courants d'impulsions surviennent.

7. Agencement selon l'une des revendications 2 à 6,
**caractérisé en ce que**
un entraînement à levier coudé (6) est prévu pour l'amplification de forces.
